(19) Europäisches Patentamt
European Patent Office
Office européen des brevets

(11) EP 0 716 096 B1

(12) EUROPÄISCHE PATENTSCHRIFT

(45) Veröffentlichungstag und Bekanntmachung des Hinweises auf die Patenterteilung:
**30.07.1997 Patentblatt 1997/31**

(51) Int Cl.6: **C08F 2/26**, C09D 157/00, C09J 157/00

(21) Anmeldenummer: **95118928.1**

(22) Anmeldetag: **01.12.1995**

# (54) Wässrige Polymerdispersionen

Aqueous polymer dispersions

Dispersions aqueuses de polymères

(84) Benannte Vertragsstaaten:
**AT BE CH DE ES FR GB IT LI NL**

(30) Priorität: **09.12.1994 DE 4443887**

(43) Veröffentlichungstag der Anmeldung:
**12.06.1996 Patentblatt 1996/24**

(73) Patentinhaber: **BASF AKTIENGESELLSCHAFT**
**67056 Ludwigshafen (DE)**

(72) Erfinder: **Leube, Hartmann F., Dr.**
**D-67061 Ludwigshafen (DE)**

(56) Entgegenhaltungen:
**FR-A- 2 325 662**

EP 0 716 096 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Vorliegende Erfindung betrifft wäßrige Polymerdispersionen, die wenigstens eine Verbindung der allgemeinen Formel I

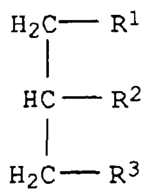

I,

mit

$R^1$ = der Acyloxyrest einer Carbonsäure aus der Gruppe umfassend 8 bis 26 C-Atome aufweisende gesättigte aliphatische Monocarbonsäuren, 8 bis 26 C-Atome aufweisende ein- oder mehrfach ungesättigte aliphatische Monocarbonsäuren und 8 bis 26 C-Atome aufweisende Monocarbonsäuren, die aus den entsprechenden ein- oder mehrfach ungesättigten aliphatischen Monocarbonsäuren durch partielle oder vollständige Hydroxylierung der ungesättigten Funktionen erhältlich sind,

$R^2$ = O-H,

$$O-(CH_2-CH_2-O)_m-H$$

mit m = 1 bis 50, $OSO_3H$, $OPO_2H_2$, ein Acyloxyrest wie $R^1$

oder 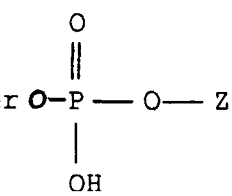

mit

$$Z = CH_2-CH_2-\overset{\oplus}{N}(CH_3)_3\overset{\ominus}{O}H,$$

$CH_2$-$CH_2$-$NH_2$,

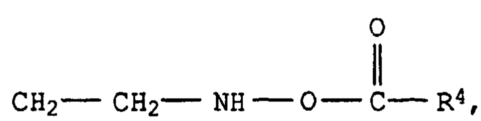

$C_6H_6(OH)_5$,

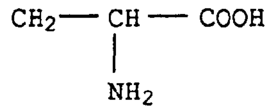

oder
H,

$R^3$ = O-H,

$$O-(CH_2-CH_2-O)_m H$$

mit m = 1 bis 50, $OSO_3H$, $OPO_2H_2$, ein Acyloxyrest wie $R^1$
oder

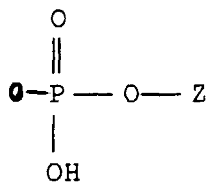

und

$R^4$ = $C_1$- bis $C_5$-Alkyl,

mit der Maßgabe, daß genau einer der beiden Reste $R^2$, $R^3$

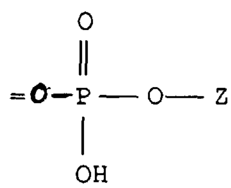

ist,
und/oder ein Salz einer Verbindung der allgemeinen Formel I enthalten und deren Gehalt an dispergiertem Polymer, bezogen auf die wäßrige Polymerdispersion, ≥ 10 Vol.-% beträgt (die Vol.-%-Angaben beziehen sich in dieser Schrift auf 25°C und 1 atm). Zweckmäßigerweise beträgt der Polymergehalt der erfindungsgemäßen wäßrigen Polymerdispersionen, in gleicher Weise bezogen, ≥ 20 Vol.-%, normalerweise 20 bis 75 Vol.-%, vorzugsweise 30 bis 65 Vol.-% und meistens 40 bis 60 Vol.-%.

Verbindungen der allgemeinen Formel I sind bekannt. Im wesentlichen handelt es sich um Phosphatide, die in der Natur in allen tierischen und pflanzlichen Zellen, vor allem im Gehirn, im Herz, in der Leber, im Eidotter und in der Sojabohne vorkommen. Unter anderem sind sie bei der Fa. Lucas Meyer GmbH & Co., Hamburg käuflich zu erwerben.

Ist

$$Z = CH_2-CH_2-\overset{\oplus}{N}(CH_3)_3\overset{\ominus}{O}H$$

und der andere der beiden Reste $R^2$, $R^3$ sowie $R^1$ ein Fettsäureacyloxyrest, bezeichnet man die Verbindungen I im engeren Sinn als Lecithine. Die Kephaline unterscheiden sich von den Lecithinen dadurch, daß Z = $CH_2$-$CH_2$-$NH_2$ ist.

Im weiteren Sprachgebrauch werden Verbindungen I, in denen einer der beiden Reste $R^2$, $R^3$ sowie $R^1$ ein Fett-

säureacyloxyrest ist, unabhängig von der Art des Substituenten Z, häufig auch ganz allgemein als Lecithine bezeichnet.

Wäßrige Polymerdispersionen sind Systeme, die in wäßrigem Dispergiermedium feinteilige Polymerteilchen in disperser Verteilung aufweisen. Das in disperser Verteilung befindliche Polymere kann beispielsweise ein Polykondensat wie ein Polyester oder Polyether, eine Polyadditionsverbindung wie ein Polyurethan oder ein durch radikalische oder ionische Polymerisation von wenigstens eine ungesättigte Kohlenstoff-Kohlenstoff-Bindung aufweisenden Monomeren erhaltenes Polymerisat sein. Dabei unterscheidet man Primär- und Sekundärdispersionen. Bei ersteren erfolgt die Herstellung des Polymeren unmittelbar in disperser Verteilung befindlich nach der Methode der radikalischen wäßrigen Emulsionspolymerisation. Im Fall von Sekundärdispersionen wird das Polymere hingegen außerhalb des wäßrigen Dispergiermediums, z.B. in organischer Lösung oder in Substanz hergestellt, und erst nach seiner Herstellung im wäßrigen Medium dispers verteilt.

Allen wäßrigen Polymerdispersionen ist gemein, daß die disperse Verteilung des Polymeren aus sich heraus in der Regel keine Stabilität aufweist. Vielmehr ist es üblicherweise erforderlich, die disperse Verteilung durch Mitverwendung von Dispergiermitteln zu stabilisieren, dies gilt insbesondere im Fall von wäßrigen Polymerdispersionen mit erhöhtem Polymervolumengehalt.

Eine wesentliche Eigenschaft wäßriger Polymerdispersionen ist ihre Fähigkeit, ebenso wie Polymerlösungen beim Verdampfen des Lösungsmittels, beim Verdampfen des wäßrigen Dispergiermediums Polymerfilme zu bilden.

Basierend auf dieser Eigenschaft finden sie vielfache Verwendung als Bindemittel, z.B. für Papierstreichfarben, Vliesstoffe, Textildruckfarben, Anstrichmittel, Lacke oder Klebstoffe.

Nachteilig an Verfilmungen wäßriger Polymerdispersionen ist, daß sie normalerweise die zur Stabilisierung der wäßrigen Polymerdispersion mitverwendeten Dispergiermittel enthalten. Kommen die Verfilmungen mit Wasser in Kontakt, kommt es häufig zu einem Auswaschen der Dispergiermittel, welche in der Regel nicht nur die Phasengrenze Polymer/Wasser sondern auch die Phasengrenze Luft/ Wasser stabilisieren und daher Schaumbildung in wäßrigen Systemen fördern.

Es besteht daher zunehmendes Interesse an Dispergiermitteln, die einerseits die disperse Verteilung von Polymeren in wäßrigem Medium in ausreichender Weise zu stabilisieren vermögen, andererseits jedoch Schaumbildung lediglich in geringem Ausmaß unterstützen. Ferner ist es günstig, wenn die angewendeten Dispergiermittel biologisch abbaubar sind.

Aufgabe der vorliegenden Erfindung war es daher, wäßrige Polymerdispersionen zur Verfügung zu stellen, die mit Dispergiermittel stabilisiert sind, die dem vorstehend beschriebenen Anforderungsprofil genügen. Demgemäß wurden die eingangs definierten wäßrigen Polymerdispersionen gefunden.

Dabei konnte von nachfolgendem Stand der Technik ausgegangen werden.

Aus Langmuir, 1994, 10, S. 2498-2500, ist bekannt, daß Mischungen aus Lecithin und Natriumcholat oder Natriumoleat die Ausbildung (bei Zusatz radikalischer Initiatoren) radikalisch polymerisierbarer wäßriger Mikroemulsionen von z.B. Styrol zu bewirken vermögen. Als Polymerisationsprodukt wird eine Lecithin enthaltende wäßrige Polymerisatdispersion erhalten. Die DE-A 43 32 005 betrifft entsprechende Systeme.

Der Begriff Emulsion umfaßt disperse Systeme von zwei nicht oder nur wenig ineinander löslichen Flüssigkeiten, in denen die Flüssigkeiten in mehr oder weniger feiner Verteilung vorliegen. Die im Überschuß vorhandene Flüssigkeit wird normalerweise als kontinuierliche oder äußere Phase bezeichnet und die in der kontinuierlichen Phase verteilte Flüssigkeit wird üblicherweise disperse Phase genannt.

Von einer wäßrigen Emulsion wird in der Regel dann gesprochen, wenn die wäßrige Phase die kontinuierliche Phase bildet. Zur Herstellung einer Emulsion bedarf es normalerweise des Zusatzes von Emulgiermitteln (Ullmanns Encyklopädie der technischen Chemie, Bd. 10, 4. Auflage, Verlag Chemie, Weinheim (1975), S. 449).

Gemäß M.K. Sharma und D.O. Shah in ACS Symposium Series 272, Macro- and Microemulsions, Theory and Applications, Ed. Dinesh O. Shah, American Chemical Society, Washington, D.C. (1985), S. 1 bis 15, unterscheidet der Fachmann Emulsionen in Makro- und in Mikroemulsionen. Erstere sind so beschaffen, daß die disperse Phase hauptsächlich aus Tröpfchen eines Durchmessers $> 0,1$ µm besteht, während bei Mikroemulsionen die disperse Phase in der Mehrzahl aus Tröpfchen eines Durchmessers $\leq 0,1$ µm besteht. Weitere Unterschiede zwischen den beiden vorgenannten Emulsionstypen bestehen gemäß den vorgenannten Autoren darin, daß Makroemulsionen ein milchig weißes Erscheinungsbild aufweisen und thermodynamisch instabil sind (d.h. überläßt man eine Makroemulsion sich selbst, trennt sie sich als Funktion der Zeit in die beiden nicht miteinander mischbaren Flüssigkeiten auf, d.h. sie entsteht nicht von allein beim Zusammenfügen ihrer Bestandteile, sondern nur unter Einwirkung zusätzlicher Kräfte wie z.B. unter Rühren), während Mikroemulsionen normalerweise ein transparentes Äußeres aufweisen und thermodynamisch stabil sind (d.h. nach dem Zusammengeben der Bestandteile einer Mikroemulsion geht das System als Funktion der Zeit von selbst (auch ohne Rühren) in den Zustand einer Mikroemulsion über und verharrt in selbigem).

Gemäß Ullmann's Encyclopedia of Industrial Chemistry, Fifth Edition, Vol. A9, VCH (1987), page 310, column 2, paragraph 5.3.3. ist die Ausbildung einer wäßrigen Mikroemulsion üblicherweise an das Vorhandensein von vier Komponenten geknüpft: der zu emulgierenden hydrophoben Substanz, dem Wasser, einem grenzflächenaktiven Emulgator und einem Lösungsvermittler (die Ausbildung einer wäßrigen Makroemulsion erfordert hingegen normalerweise das

Beisein der zu emulgierenden hydrophoben Substanz, eines grenzflächenaktiven Emulgators, des Wassers und von Verteilungsenergie).

Welche Rolle in diesem Zusammenhang dem Lecithin in Langmuir 1994, 10, 2498-2500, zukommt, ist offen. Zu entnehmen ist diesem Stand der Technik lediglich, daß bei Vorhandensein bestimmter Mengen von Wasser, Styrol, Lecithin und Natriumcholat oder Natriumoleat (in bestimmten Mengenverhältnissen) sich eine wäßrige Mikroemulsion des Styrol in Wasser ausbildet, die radikalische polymerisierbar ist und dabei zu einer wäßrigen Polymerisatdispersion führt. Es läßt sich daraus jedoch nicht entnehmen, daß Lecithin ein geeignetes Dispergiermittel zur Stabilisierung wäßriger Polymerdispersionen bildet. Dies um so mehr, als technisch interessante wäßrige Polymerdispersionen normalerweise einen Polymervolumengehalt, auf die wäßrige Polymerdispersion bezogen, von wenigstens 10 Vol.-% aufweisen. Die radikalische Polymerisation von wäßrigen Mikroemulsionen radikalisch polymerisierbarer Monomere führt im Normalfall jedoch zu sehr verdünnten wäßrigen Polymerdispersionen. Dies hängt u.a. damit zusammen, daß die Polymerteilchendurchmesserverteilung von aus wäßrigen Mikroemulsionen radikalisch polymerisierbarer Monomere durch radikalische Polymerisation hergestellten wäßrigen Polymerdispersionen sehr eng (monodispers) und auf Durchmesser < 120 nm beschränkt ist (vgl. Langmuir 1994, 10, S. 2498, Spalte 1), was bei erhöhtem Polymervolumengehalt zu nicht mehr fließfähigen Systemen führt (vgl. z.B. DE-A 42 13 965 und darin zitierte Literatur). Aus entsprechenden Gründen ist bereits der Monomerenvolumengehalt der wäßrigen Ausgangsmonomerenmikroemulsion beschränkt.

So beträgt der Polymervolumengehalt in Langmuir 1994, 10, S. 2498-2500, in allen Fällen ≤ 5 Vol.-%, bezogen auf die resultierende wäßrige Polymerisatdispersion.

Ein weiterer Unterschied zwischen durch radikalische wäßrige Makroemulsionspolymerisation (geht von einer wäßrigen Makroemulsion der zu polymerisierenden Monomeren aus) erhältlichen wäßrigen Polymerisatdispersionen und durch radikalische wäßrige Mikroemulsionspolymerisation (geht von einer wäßrigen Mikroemulsion der zu polymerisierenden Monomeren aus) erhaltenen wäßrigen Polymerisatdispersionen besteht im Normalfall im auf das dispergierte Polymer bezogenen Gehalt an Emulgier- bzw. Dispergiermittel. Bei durch radikalische wäßrige Makroemulsionspolymerisation erhaltenen wäßrigen Polymerisatdispersionen beträgt der so bezogene Gehalt an Dispergiermittel in der Regel ≤ 20 Gew.-%, häufig ≤ 10 Gew.-% und vorzugsweise ≤ 5 Gew.-%, womit eine Begrenzung der Neigung der wäßrigen Polymerisatdispersion zur Schaumbildung einhergeht. Im Unterschied dazu beträgt der in gleicher Weise bezogene Gehalt der in Langmuir, 1994, 10, S. 2498-2500, verwendeten Gesamtmengen an Emulgiermittel in allen Ausführungsbeispielen ≥ 30 Gew.-%.

Ein weiterer Unterschied zwischen radikalischer wäßriger Makroemulsionspolymerisation und radikalischer wäßriger Mikroemulsionspolymerisation besteht darin, daß bei ersterer das in disperser Verteilung befindliche Monomerentröpfchen im wesentlichen lediglich als Monomerenreservoir fungiert, die Polymerisationsorte selbst sich jedoch außerhalb der Monomerentröpfchen befinden und durch Diffusion über die wäßrige Phase mit Monomeren versorgt werden. Die Ausbildung der Polymerisationsorte wird dabei durch die verwendeten Dispergiermittel wesentlich mitgeprägt (vgl. z.B. J.W. Vanderhoff, in "Vinyl Polymerization", Part II, "Kinetics and Mechanisms of Polymerization", Vol. 1, George E. Harn, Ed., Marcel Dekker, New York, 1969, p. 5).

Im Unterschied dazu wird davon ausgegangen, daß bei der radikalischen wäßrigen Mikroemulsionspolymerisation die emulgierten Monomerentröpfchen selbst den Polymerisationsort bilden. Gestützt wird diese Vorstellung insbesondere dadurch, daß die Durchmesser der resultierenden Polymerisatteilchen im wesentlichen jenen der Monomerentröpfchen in der wäßrigen Ausgangsemulsion entsprechen (vgl. z.B. Journal of Polymer Science: Polymer Letters Edition, Vol. 22, 31-38 (1984)).

D.h. von der Eignung eines Hilfsmittels für die radikalische wäßrige Mikroemulsionspolymerisation kann nicht auf die Eignung desselben Hilfsmittels für die radikalische wäßrige Makroemulsionspolymerisation geschlossen werden. In diesem Zusammenhang sei festgehalten, daß die seitens Antonietti in Langmuir 1994, 10, S. 2498-2500, gegebene Lehre in jedem Fall von einer Lecithinverwendung als Dispergiermittel für wäßrige Polymerisatdispersionen wegführt. So wird in Spalte 1 auf Seite 2499 hingewiesen, daß die resultierenden wäßrigen Polymerisatdispersionen beim Ansäuern koagulieren.

Nach Auffassung von Watanabe et al. in Makromol. Chem 193, S. 2781-2792 (1992) sind in der Natur vorkommende Lipide, zu denen auch die natürlichen Phosphatide der allgemeinen Formel I gehören, zur Dispergierung von Polymerteilchen in wäßrigem Medium generell ungeeignet. Watanabe et al. führen dies u.a. auf die hydrophobe Wechselwirkung der in natürlichen Phosphatiden enthaltenen langen Alkylketten zurück, die eine gewisse Assoziatbildungstendenz implizieren, wie sie auch von Assoziativ-Verdickern bekannt ist (vgl. z.B. EP-B 339 712).

Watanabe et al. empfehlen daher als für radikalische wäßrige Makroemulsionspolymerisationen zu verwendende Dispergiermittel modifizierte Ausführungsformen der Verbindungen der allgemeinen Formel I. Die Modifikationen bestehen primär darin, daß wenigstens eine Alkylkette durch einen aromatischen Ring unterbrochen ist, der einen Vinylrest als Substituenten aufweist, über den die seitens Watanabe et al. empfohlenen Dispergiermittel im Verlauf der radikalischen wäßrigen Makroemulsionspolymerisation ins Polymerisat copolymerisiert werden. An dieser Stelle sei darauf hingewiesen, daß auch für den Fall, daß in den Verbindungen I $R^1$ der Acyloxyrest einer ungesättigten Carbonsäure ist, eine solche vorgenannte Copolymerisation in der Regel nicht bewirkt wird, da die entsprechenden Kohlenstoff-Kohlenstoff-Doppelbindungen keine aktivierten Doppelbindungen sind und daher keine ausgeprägte Copolymerisationsneigung aufweisen. Es ist ferner festzuhalten, daß der Polymerisatvolumengehalt in allen Ausführungsbeispielen von Watanabe et al. unterhalb von 6 Vol.-%, bezogen auf die wäßrige Polymerisatdispersion, liegt.

In entsprechender Weise empfehlen Yamaguchi, Watanabe und Nakahama in Makromol. Chem. 190, S. 1195-1205 (1989) ebenfalls modifizierte Ausführungsformen der Verbindungen der allgemeinen Formel I als Dispergiermittel für nach der Methode der radikalischen wäßrigen Makroemulsionspolymerisation erhältliche wäßrige Polymerisatdispersionen, deren wesentliche Modifikation in entsprechender Weise darin liegt, daß die Alkylketten verkürzt und durch einen aromatischen Ring unterbrochen sind. Die beschriebenen Modifikationen beinhalten jedoch den Nachteil einer geminderten biologischen Abbaubarkeit der Dispergiermittel sowie einen hohen Syntheseaufwand. Bemerkenswert ist, daß auch die Ausführungsbeispiele in Makromol. Chem. 190, S. 1195-1205 (1989) auf solche wäßrigen Polymerisatdispersionen beschränkt sind, deren Polymerisatvolumengehalt, bezogen auf die wäßrige Polymerisatdispersion, unterhalb von 6 Vol.-% liegt, d.h. in einem Bereich, in dem die Stabilisierungsprobleme wäßriger Polymerdispersionen bei üblicher Polymerteilchengröße nicht besonders ausgeprägt sind.

Demgegenüber wurde erfindungsgemäß gefunden, daß Verbindungen der allgemeinen Formel I bis zu höchsten Polymervolumengehalten geeignete Dispergiermittel für wäßrige Polymerdispersionen bilden. Dabei besticht nicht nur ihre hervorragende stabilisierende Wirkung, sondern insbesondere ihre wenig ausgeprägte Neigung zur Förderung von Schaumbildung, ihre biologische Abbaubarkeit sowie ihre Zuordnung zu den nachwachsenden Rohstoffen.

Erfindungsgemäß geeignete Verbindungen I sind z.B. solche, in denen sich $R^1$ von einer Fettsäure aus Tabelle 1 in Römpp Chemie Lexikon, Cm-G, Thieme Verlag, 1990, 9. Auflage, S. 1344, ableitet. Unter diesen sind solche bevorzugt, in denen sich $R^1$ von Palmitinsäure ($CH_3$-$(CH_2)_{14}$-COOH), Stearinsäure ($CH_3$-$(CH_2)_{16}$-COOH), Ölsäure ($CH_3$-$(CH_2)_7$-CH=CH-$(CH_2)_7$-COOH), Linolsäure ($CH_3$-$(CH_2)_4$-CH=CH-$CH_2$-CH=CH-$(CH_2)_7$-COOH), Linolensäure ($CH_3$-$CH_2$-CH=CH-$CH_2$-CH=CH-$CH_2$-CH=CH-$(CH_2)_7$-COOH), Palmitoleinsäure oder Arachidonsäure ableitet.

Bevorzugt sind solche Verbindungen I, in denen $R^1$ der Acyloxyrest einer eine gerade Anzahl von C-Atomen aufweisenden aliphatischen Monocarbonsäure ist. Ferner beträgt die Anzahl der C-Atome in $R^1$ generell bevorzugt 12 bis 24, besonders bevorzugt 14 bis 22 und ganz besonders bevorzugt 16 bis 18. Ferner ist es günstig, wenn $R^1$ unverzweigt ist. Besonders günstige Reste $R^1$ sind unverzweigt und weisen eine gerade Anzahl von C-Atomen auf. Die vorgenannten Aussagen gelten auch für $R^2$ oder $R^3$, falls diese ein Acyloxyrest wie $R^1$ sind.

Günstige Verbindungen I sind insbesondere jene, in denen $R^2$ oder $R^3$ eine Hydroxylgruppe ist, unter denen wiederum jene bevorzugt sind, in denen $R^2$ eine Hydroxylgruppe ist.

Weiterhin sind solche Verbindungen I von Vorteil, in denen

$$Z = CH_2 — CH_2 — \overset{\oplus}{N}(CH_3)_3\overset{\ominus}{O}H,$$

$CH_2$-$CH_2$-$NH_2$ oder $C_6H_6(OH)_5$ ist.

Besonders günstig sind jene Verbindungen I, die die vorstehend als bevorzugt aufgeführten Merkmale simultan aufweisen.

Geeignet sind ferner Gemische von Verbindungen I, wie sie z.B. in Ei-, Soja- oder Rapslecithin (erweiterter Sprachgebrauch) enthalten sind, oder sich von diesen ableiten. Dies gilt insbesondere für enzymatisch hydrolysiertes Lecithin, aus dem eine Fettsäurekette durch enzymatische Behandlung abgespalten, d.h. durch eine Hydroxylgruppe ersetzt ist. Es gilt aber auch für hydroxyliertes Lecithin (Sättigung von Fettsäure-Doppelbindungen mit Hydroxylgruppen) oder acetyliertes Lecithin (Anlagerung von Carbonsäureresten an die freie Aminogruppe des $CH_2$-$CH_2$-$NH_2$ Z-Restes) sowie in vorgenannter Weise mehrfach modifiziertes Lecithin.

Geeignete Lecithine bzw. modifizierte Lecithine der allgemeinen Formel I sind die Lipotine® der Fa. Lucas Meyer GmbH & Co., Hamburg. Dies gilt insbesondere für Lipotin 100, Lipotin SB, Lipotin 100J, Lipotin H, Lipotin NE, Lipotin NA, Lipotin AN, aber auch für Lipopur®.

Als geeignete Salze der Verbindungen der allgemeinen Formel I kommen insbesondere deren Alkalimetall- (z.B. Na, K) und Ammoniumsalze in Betracht.

Wie bereits eingangs erwähnt, kommen als disperse Phase der erfindungsgemäßen wäßrigen Polymerdispersionen sowohl Polykondensate wie ein Polyester oder ein Polyether, Polyadditionsverbindungen wie Polyurethane als auch durch radikalische oder ionische Polymerisation von wenigstens eine ungesättigte Kohlenstoff-Kohlenstoff-Bindung aufweisenden Monomeren erhältliche Polymerisate in betracht. Das relative zahlenmittlere Molekulargewicht der dispergierten Polymere beträgt zweckmäßig 10000 bis $3 \cdot 10^6$. Häufig liegt es bei 25000 bis $2 \cdot 10^6$ bzw. 50000 bis $1 \cdot 10^6$. Vielfach liegt es bei 150000 bis $1 \cdot 10^6$. Handelt es sich um vernetzte Polymere, ist deren zahlenmittleres Molekulargewicht häufig nicht bestimmbar.

Der Gesamtgehalt an Dispergiermittel beträgt für die erfindungsgemäßen wäßrigen Polymerdispersionen zweckmäßigerweise, bezogen auf dispergiertes Polymer, ≤ 20, oft ≤ 10, meist ≤ 5 Gew.-%. In der Regel liegt er jedoch, in gleicher Weise bezogen, bei ≥ 0,1, meist ≥ 0,5 Gew.-%. Erfindungsgemäß kann dieser Gehalt an Dispergiermittel ausschließlich aus Verbindungen der allgemeinen Formel I und/oder deren Salzen bestehen, er kann jedoch über die vorstehend genannten Verbindungen hinaus zusätzlich andere übliche Dispergiermittel umfassen. Vorzugsweise enthält er, auf die Gesamtmenge an Dispergiermittel bezogen, wenigstens 10, häufig wenigstens 20 Gew.-% einer Verbindung der allgemeinen Formel I und/oder deren Salzen, häufig jedoch nicht mehr als 80 Gew.-% und meist 20 bis 60 Gew.-%. Selbstverständlich kann der wie vorstehend bezogene Anteil auch 100 Gew.-% betragen. Der zahlenmittlere Polymerteilchendurchmesser $\bar{d}_n$ der erfindungsgemäßen wäßrigen Polymerdispersionen beträgt oft ≥ 100 nm, üblicherweise > 120 oder > 130 nm, meist > 150 nm. Im Normalfall gilt aber auch $\bar{d}_n \leq 5000$ nm, und häufig auch $\bar{d}_n \leq 1000$ nm. Besonders repräsentativ sind erfindungsgemäße wäßrige Polymerdispersionen mit $\bar{d}_n \geq 200$ nm und $\bar{d}_n \leq 800$ nm.

Bevorzugt werden solche erfindungsgemäßen wäßrigen Polymerdispersionen, deren dispergiertes Polymer durch radikalische Polymerisation von wenigstens eine ungesättigte Kohlenstoff-Kohlenstoff-Bindung aufweisenden Monomeren, insbesondere durch radikalische wäßrige Makroemulsionspolymerisation derselben (sowie gegebenenfalls im Anschluß daran erfolgende polymeranaloge Umsetzung), erhältlich ist. Bei der radikalischen wäßrigen Makroemulsionspolymerisation erfolgt die radikalische Polymerisation in dem Fachmann an sich bekannter Weise ausgehend von einer wäßrigen Makroemulsion der zu polymerisierenden Monomeren unter Zusatz von radikalischen Polymerisationsinitiatoren und Dispergiermittel.

Als wenigstens eine monoethylenisch ungesättigte Gruppe aufweisende Monomere kommen dabei u.a. insbesondere in einfacher Weise radikalisch polymerisierbare Monomere in Betracht wie die Olefine, z.B. Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat, Vinylpivalat und Vinylstearat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, -n-butyl, -iso-butyl, -tert.-butyl und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren. Die genannten Monomeren bilden im Fall von ausschließlich nach der Methode der radikalischen wäßrigen Makroemulsionspolymerisation erzeugten wäßrigen Polymerisatdispersionen in der Regel die Hauptmonomeren, die, bezogen auf die Gesamtmenge der nach dem Verfahren der radikalischen wäßrigen Makroemulsionspolymerisation zu polymerisierenden Monomeren normalerweise einen Anteil von mehr als 50 Gew.-% auf sich vereinen. In aller Regel weisen diese Monomeren in Wasser bei Normalbedingungen (25°C, 1 atm) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Im Fall von ausschließlich nach der Methode der radikalischen wäßrigen Makroemulsionspolymerisation erzeugten wäßrigen Polymerisatdispersionen werden die vorgenannten, eine erhöhte Wasserlöslichkeit aufweisenden, Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Monomere, die üblicherweise die innere Festigkeit der Verfilmungen wäßriger Polymerdispersionen erhöhen, weisen normalerweise wenigstens eine Epoxy-, Hydroxy-, N-Methylol- oder Carbonylgruppe oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkenolen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate- und dimethacrylate wie Ethylenglykoldiacrylat, 1,3-Butylenglykoldiacrylat, 1,4-Butylenglykoldiacrylate sowie Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat, Ureidoethylmethacrylat und Acrylamidoglykolsäure. Die vorgenannten Monomeren werden im Fall von ausschließlich nach der Methode der radikalischen wäßrigen Makroemulsionspolymerisation erzeugten wäßrigen Polymerisatdispersionen, bezogen auf die Gesamtmenge der zu polymerisierenden Monomeren, meist in Mengen von 0,5 bis 10 Gew.-% miteinpolymerisiert.

Vorzugsweise sind die dispergierten Polymerisate erfindungsgemäßer wäßriger Polymerisatdispersionen in polymerisierter Form zu

- 70 bis 100 Gew.-% aus Estern der Acryl- und/oder Methacrylsäure mit 1 bis 12 C-Atome aufweisenden Alkanolen und/oder Styrol (Gruppe I),

oder

- 70 bis 100 Gew.-% Styrol und/oder Butadien (Gruppe II),

oder

- 70 bis 100 Gew.-% Vinylchlorid und/oder Vinylidenchlorid (Gruppe III),

oder

- 40 bis 100 Gew.-% Vinylacetat, Vinylpropionat und/oder Ethylen (Gruppe IV)

aufgebaut.

Besonders relevant sind innerhalb der Gruppe I Monomerenzusammensetzungen, die enthalten:

| | |
|---|---|
| 0,1 bis 5 Gew.-% | wenigstens einer 3 bis 6 C-Atome aufweisenden $\alpha,\beta$-monoethylenisch ungesättigten Carbonsäure und/oder deren Amid und |
| 70 bis 99,9 Gew.-% | an Estern der Acryl- und/oder Methacrylsäure mit 1 bis 12 C-Atome aufweisenden Alkanolen und/oder Styrol. |

Generell ist es günstig, wenn sich die Monomerenzusammensetzungen innerhalb der Gruppe I ausschließlich aus nachfolgenden Monomeren der Gruppe umfassend Ethylacrylat, n-Butylacrylat, 2-Ethylhexylacrylat, Methylmethacrylat, tert.-Butylmethacrylat, Styrol, Acrylsäure, Methacrylsäure, Acrylamid, Methacrylamid und Acrylnitril rekrutieren.

Besonders relevante Monomerenzusammensetzungen innerhalb der Gruppe II enthalten:

| | |
|---|---|
| 0,1 bis 5 Gew.-% | wenigstens einer 3 bis 6 C-Atome aufweisenden $\alpha,\beta$-monoethylenisch ungesättigten Carbonsäure und/oder deren Amid und |
| 70 bis 99,9 Gew.-% | Styrol und/oder Butadien. |

Besonders relevante Monomerenzusammensetzungen innerhalb der Gruppe IV enthalten:

| | |
|---|---|
| 0,1 bis 5 Gew.-% | wenigstens einer 3 bis 6 C-Atome aufweisenden $\alpha,\beta$-monoethylenisch ungesättigten Carbonsäure und/oder deren Amid und |
| 40 bis 99,9 Gew.-% | Vinylacetat, Vinylpropionat und/oder Ethylen. |

Häufig erfolgt die Wahl der Monomerenzusammensetzung innerhalb der vorgenannten Zusammensetzungsraster so, daß die Tg-Werte (DSC, midpoint temperature) der resultierenden dispergierten Polymerisate unterhalb von 50 bzw. unterhalb von 30°C, oft unterhalb 20°C und vielfach auch unterhalb 0°C (bis zu -70°C) liegen.

Im Unterschied zur radikalischen wäßrigen Mikroemulsionspolymerisation, die so durchgeführt wird, daß man die Gesamtmenge der wäßrigen Mikroemulsion ins Polymerisationsgefäß vorlegt (infolge der geringen Monomerenvolumenkonzentration bereitet die Abfuhr der Reaktionswärme keine Probleme), wird die radikalische wäßrige Makroemulsionspolymerisation zweckmäßigerweise nach dem Zulaufverfahren durchgeführt. D.h. die überwiegende Menge der das dispergierte Polymerisat konstituierenden Monomeren, in der Regel 50 bis 100, vorzugsweise 70 bis 100, besonders bevorzugt 80 bis 100 und ganz besonders vorteilhaft 90 bis 100 Gew.-% ihrer Gesamtmenge, werden dem Polymerisationsgefäß erst ab Beginn der radikalischen wäßrigen Makroemulsionspolymerisation gemäß des Fortschreitens der Polymerisation der bereits im Polymerisationsgefäß befindlichen Monomeren zugesetzt. In der Regel erfolgt der Zusatz durch kontinuierliche Zufuhr (in der Regel als reiner Monomerenzulauf oder in wäßriger Phase als Makroemulsion voremulgiert), und zwar normalerweise so, daß wenigstens 80, bevorzugt wenigstens 90 und ganz besonders bevorzugt wenigstens 95 Gew.-% der bereits im Polymerisationsgefäß befindlichen Monomeren einpolymerisiert sind. Zur Beeinflussung der Teilchengröße der dispergierten Polymerisatpartikel können dabei sogenannte wäßrige Saat-Polymerisatdispersionen mitverwendet werden (vgl. EP-B 40 419 und Encyclopedia of Polymer Science and Technology, Vol. 5, John Wiley & Sons Inc., New York (1966) S. 847).

Als radikalische Polymerisationsinitiatoren kommen für die vorstehend beschriebene radikalische wäßrige Makroemulsionspolymerisation alle diejenigen in Betracht, die in der Lage sind, eine radikalische wäßrige Emulsionspolymerisation auszulösen. Es kann sich dabei sowohl um Peroxide als auch um Azoverbindungen handeln. Selbstverständlich kommen jedoch auch Redoxinitiatorsysteme in Betracht. Die Verwendung von Peroxodischwefelsäure und/oder deren Alkalimetallsalzen und/oder ihrem Ammoniumsalz als radikalische Starter ist bevorzugt. Vorzugsweise beträgt die Menge der eingesetzten radikalischen Initiatorsysteme, bezogen auf die Gesamtmenge der zu polymerisierenden Monomeren, 0,1 bis 2 Gew.-%. Die Art und Weise, in der das radikalische Initiatorsystem im Verlauf der beschriebenen radikalischen wäßrigen Makroemulsionspolymerisation dem Polymerisationsgefäß zugegeben wird, ist eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Makroemulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Eine unmittelbare Konsequenz der vorgenannten Tatsache ist, daß als Reaktionstemperatur für die radikalische wäßrige Makroemulsionspolymerisation der gesamte Bereich von 0 bis 100°C in Betracht kommt, Temperaturen von 70 bis 100°C, vorzugsweise 80 bis 100°C und besonders bevorzugt > 85 bis 100°C jedoch bevorzugt angewendet werden.

Die Anwendung von erhöhtem oder vermindertem Druck ist möglich, so daß die Polymerisationstemperatur auch 100°C übersteigen und bis zu 130°C oder mehr betragen kann. Vorzugsweise werden leichtflüchtige Monomere wie Ethylen, Butadien oder Vinylchlorid unter erhöhtem Druck polymerisiert. Natürlich ist es möglich, im Rahmen der radikalischen wäßrigen Makroemulsionspolymerisation das Molekulargewicht regelnde Substanzen wie tert.-Dodecylmercaptan mitzuverwenden.

Neben den Verbindungen der allgemeinen Formel I und ihren Salzen können zur Stabilisierung erfindungsgemäßer wäßriger Polymerdispersionen, wie bereits erwähnt, auch andere, insbesondere im Rahmen radikalischer wäßriger Makroemulsionspolymerisationen üblicherweise verwendete, Dispergiermittel, mitverwendet werden (als Hilfsdispergiermittel). Als solche kommen sowohl Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, Alkylrest: $C_4$ bis $C_{12}$), ethoxylierte Fettalkohole (EO-Grad: 3 bis 100, Alkylrest: $C_8$ bis $C_{18}$), sowie Alkali- und Ammoniumsalze von Alkylsulfaten (Alkylrest: $C_8$ bis $C_{16}$), von Schwefelsäurehalbestern ethoxylierter Alkanole (EO-Grad: 1 bis 70, Alkylrest: $C_{12}$ bis $C_{18}$) und ethoxylierter Alkylphenole (EO-Grad: 3 bis 100, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.

Als geeignete grenzflächenaktive Substanzen haben sich ferner Verbindungen der allgemeinen Formel II

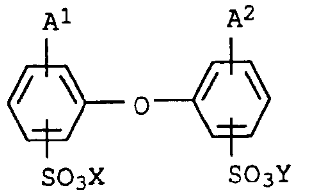

II,

worin $A^1$ und $A^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $A^1$ und $A^2$ bevorzugt lineare oder verzweigte Alkylreste mit 6 bis 18 C-Atomen oder Wasserstoff, und insbesondere mit 6,12 und 16 C-Atomen, wobei $A^1$ und $A^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $A^1$ ein verzweigter Alkylrest mit 12 C-Atomen und $A^2$ Wasserstoff oder $A^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen II sind allgemein bekannt, z.B. aus der US-A 4,269,749, und im Handel erhältlich.

Mit Vorteil beträgt die Menge an eingesetztem Hilfsdispergiermittel 0,5 bis 6, vorzugsweise 1 bis 3 Gew.-% bezogen auf dispergiertes Polymer.

Bevorzugt werden die erfindungsgemäßen Verbindungen I und/oder deren Salze mit anionischen und/oder nichtanionischen Hilfsdispergiermitteln kombiniert. Bemerkenswerterweise konnte in diesem Zusammenhang eine inhibierende Wirkung der erfindungsgemäßen Verbindungen I auf die die Schaumbildung fördernde Wirkung der Hilfsdispergiermittel festgestellt werden.

Prinzipiell können die Verbindungen der allgemeinen Formel I und/oder deren Salze (ebenso wie die Hilfsdispergiermittel) sowohl vor, während oder nach der Herstellung der dispersen Verteilung der Polymeren im wäßrigen Dispergiermedium (vor, während und/oder nach der radikalischen wäßrigen Makroemulsionspolymerisation) zugesetzt werden (üblicherweise werden sie auch zur Stabilisierung der wäßrigen Monomerenmakroemulsion verwendet). Aufgrund ihrer hydrophoben, öligen Erscheinungsform werden sie zweckmäßig nicht in Substanz zugesetzt. Vielmehr ist es für den angestrebten Erfolg von Vorteil, wenn sie in in wäßrigem Medium durch Einwirkung erhöhter Scherkräfte mikronisierter Form (feinteilige tröpfchenförmige Verteilung in Wasser) angewendet werden. In günstiger Weise beträgt der Gehalt solcher wäßriger Emulsionen (Mikronisate) an erfindungsgemäßen Verbindungen I, bezogen auf die wäßrige Emulsion, 15 bis 25 Gew.-%. Eine andere empfehlenswerte Möglichkeit besteht darin, die Verbindungen der allgemeinen Formel I in den Monomeren gelöst zur Herstellung erfindungsgemäßer wäßriger Polymerdispersionen anzuwenden. Führt man beim Zulaufverfahren die Monomeren in wäßriger Makroemulsion zu, enthält diese mit Vorteil auch die Verbindungen der allgemeinen Formel I sowie gegebenenfalls mitverwendete Hilfsdispergiermittel. Die erfindungsgemäßen wäßrigen Polymerdispersionen zeichnen sich durch voll befriedigende Stabilität der dispersen Verteilung (insbesondere gegenüber Einwirkung mehrwertiger Ionen oder erhöhter Scherkräfte) sowie eine reduzierte Schaumneignung aus. Besonders vorteilhaft ist, daß die die disperse Verteilung stabilisierende Wirkung der Verbindungen der allgemeinen Formel I im wesentlichen über den gesamten pH-Bereich des wäßrigen Dispergiermediums (pH 1 bis pH 12) besteht. Von besonderem Vorteil ist die stabilisierende Wirkung im pH-Bereich von 2 bis 5, vorzugsweise 2 bis 4, da solchermaßen saure wäßrige Polymerdispersionen gegenüber Befall durch Mikroorganismen auch ohne Zusatz von Mikrociden im wesentlichen resistent sind. Weisen die Verbindungen der allgemeinen Formel I Acyloxyreste ungesättigter Fettsäuren auf, können diese in den Verfilmungen der erfindungsgemäßen wäßrigen Polymerdispersionen unter Einwirkung von Luftsauerstoff autooxydieren, was ihr Auswaschen bei Einwirkung von Wasser unterbindet.

Anwendungsgebiete für die erfindungsgemäßen wäßrigen Polymerdispersionen bilden deren Verwendung als Bindemittel, z.B. für Vliesstoffe, Textildruck, Lacke und Anstriche und/oder als Klebstoff, insbesondere als Haftkleber.

Beispiele

I) Herstellung erfindungsgemäßer wäßriger Polymerdispersionen D1 bis D9 und einer Vergleichsdispersion VD1 (alle Polymerisationen wurden unter $N_2$-Atmosphäre durchgeführt).

D1: 50 g Lipotin NE (enzymatisch hydrolysiertes Lecithin) wurden bei 25°C mittels eines Dispergierrührers (Ultra-Turrax, Fa. IKA, Staufen) in 200 g Wasser mikronisiert (9000 Umdrehungen pro Minute (9000 upm), 5 min). Erhalten wurde eine wäßrige Dispersion (Mikronisat) des Lipotin NE. Die mittlere Teilchengröße betrug 217 nm (mittlere Teilchendurchmesser bedeuten in allen Beispielen (wenn nichts anderes erwähnt ist) stets den z-Mittelwert, ermittelt über Photonenkorrelationsspektroskopie mittels eines Autosizer 2c der Fa. Malvern Instruments, England).

In einem Polymerisationsgefäß wurde ein Gemisch aus

| | |
|---|---|
| 17,7 g | einer 35 gew.-%igen wäßrigen Polystyrolsaatdispersion (zahlenmittlere Polystyrolteilchengröße: 38 nm; stabilisiert mittels 10 Gew.-%, bezogen auf dispergiertes Polystyrol, des Na-Salzes der Dodecylbenzolsulfonsäure), |
| 2 Gew.-% | des Zulaufs 1, |
| 20 Gew.-% | des Zulaufs 2 und |
| 250 g | Wasser |

vorgelegt. Unter Rühren wurde das Gemisch innerhalb von 15 min auf 85°C erhitzt und anschließend noch 10 min unter Rühren bei dieser Temperatur gehalten. Anschließend wurde unter Aufrechterhaltung der 85°C die Restmenge an Zulauf 1 innerhalb von 3 h und die Restmenge an Zulauf 2 innerhalb von 3,5 h (gleichzeitig beginnend) dem Polymerisationsgefäß unter Rühren kontinuierlich zudosiert. Danach wurde das Polymerisationsgemisch noch 2,5 h bei 85°C gerührt. Erhalten wurde eine wäßrige Polymerisatdispersion D1 eines Polymervolumengehaltes von 45,9 Vol.-%. Der mittlere Polymerteilchendurchmesser betrug 183 nm.

Zulauf 1: Wäßrige Emulsion aus
300 g Styrol,
282 g n-Butylacrylat,
18 g Acrylamid,
30 g des wäßrigen Lipotin NE Mikronisats und
228 g Wasser.

Zulauf 2: 2,4 g Natriumperoxodisulfat und
100 g Wasser.

D2: In einem Polymerisationsgefäß wurde ein Gemisch aus

| | |
|---|---|
| 4,0 g | Dowfax 2A1 (45 gew.-%ig), |
| 2 Gew.-% | des Zulaufs 1, |
| 20 Gew.-% | des Zulaufs 2 und |
| 250 g | Wasser |

vorgelegt. Unter Rühren wurde das Gemisch innerhalb von 15 min auf 85°C erhitzt und anschließend unter Rühren noch 10 min bei dieser Temperatur gehalten. Anschließend wurden unter Aufrechterhaltung der 85°C und unter Rühren (zeitgleich beginnend) die Restmenge des Zulauf 1 (innerhalb von 3 h) und die Restmenge des Zulauf 2 (innerhalb von 3,5 h) kontinuierlich zudosiert. Danach wurde das Polymerisationsgemisch noch 2,5 h bei 85°C gerührt.
Erhalten wurde eine wäßrige Polymerdispersion D2 eines Polymervolumengehaltes von 46,6 Vol.-%. Der mittlere Polymerteilchendurchmesser betrug 189 nm.

Zulauf 1: Wäßrige Makroemulsion aus
300 g Styrol,
282 g n-Butylacrylat,
18 g Acrylamid,
30 g des wäßrigen Lipotin NE Mikronisats aus D1 und
228 g Wasser.

Zulauf 2: 2,4 g Natriumperoxodisulfat und
100 g Wasser.

D3: In einem Polymerisationsgefäß wurde ein Gemisch aus

| | |
|---|---|
| 14,8 g | einer 35 gew.-%igen wäßrigen Polystyrolsaatdispersion (zahlenmittlere Polystyrolteilchengröße: 38 nm; stabilisiert mittels 10 Gew.-%, bezogen auf dispergiertes Polystyrol, des Na-Salzes der Dodecylbenzolsulfonsäure), |
| 15 Gew.-% | von Zulauf 1, |
| 10 Gew.-% | von Zulauf 2 und |

| | |
|---|---|
| 300 g | Wasser |

vorgelegt. Unter Rühren wurde das Gemisch innerhalb von 15 min auf 85°C erhitzt und anschließend noch 10 min unter Rühren bei dieser Temperatur gehalten. Anschließend wurden unter Aufrechterhaltung der 85°C und unter Rühren (zeitgleich beginnend) die Restmenge in Zulauf 1 (innerhalb von 2 h) und die Restmenge an Zulauf 2 (innerhalb von 2,5 h) kontinuierlich zudosiert. Danach wurde das Polymerisationsgemisch noch 2,5 h bei 85°C gerührt. Erhalten wurde eine wäßrige Polymerdispersion D3 eines Polymervolumengehaltes von 28,4 Vol.-%. Der mittlere Polymerteilchendurchmesser betrug 175 nm.

Zulauf 1: Wäßrige Makroemulsion aus
485 g n-Butylacrylat,
15 g Acrylamid,
25 g des wäßrigen Lipotin NE Mikronisats aus D1 und
670 g Wasser.

Zulauf 2: 2 g Natriumperoxodisulfat und
200 g Wasser.

D4: In einem Polymerisationsgefäß wurde ein Gemisch aus

| | |
|---|---|
| 14,8 g | einer 35 gew.-%igen wäßrigen Polystyrolsaatdispersion (zahlenmittlere Polystyrolteilchengröße: 38 nm; stabilisiert mittels 10 Gew.-%, bezogen auf dispergiertes Polystyrol, des Na-Salzes der Dodecylbenzolsulfonsäure), |
| 15 Gew.-% | von Zulauf 1, |
| 10 Gew.-% | von Zulauf 2 und |
| 300 g | Wasser |

vorgelegt. Unter Rühren wurde das Gemisch innerhalb von 15 min auf 85°C erhitzt und anschließend unter Rühren noch 20 min bei dieser Temperatur gehalten. Anschließend wurden unter Aufrechterhaltung der 85°C und unter Rühren (zeitgleich beginnend) die Restmenge des Zulauf 1 (innerhalb 2 h) und die Restmenge des Zulauf 2 (innerhalb von 2,5 h) kontinuierlich zudosiert. Danach wurde das Polymerisationsgemisch noch 2,5 h bei 85°C gerührt. Erhalten wurde eine wäßrige Polymerdispersion D4 eines Polymervolumengehaltes von 27,4 Vol.-%. Der mittlere Polymerteilchendurchmesser betrug 169 nm.

Zulauf 1: Wäßrige Makroemulsion aus
5 g Lipotin NE, gelöst in 200 g Styrol,
285 g n-Butylacrylat,
15 g Acrylamid und
690 g Wasser.

Zulauf 2: 2 g Natriumperoxodisulfat und
200 g Wasser.

D5: In einem Polymerisationsgefäß wurde ein Gemisch aus

| | |
|---|---|
| 17,7 g | einer 35 gew.-%igen Polystyrolsaatdispersion (zahlenmittlere Polystyrolteilchengröße: 38 nm; stabilisiert mittels 10 Gew.-%, bezogen auf dispergiertes Polystyrol, des Na-Salzes der Dodecylbenzolsulfonsäure), |
| 2 Gew.-% | von Zulauf 1, |
| 20 Gew.-% | von Zulauf 2 und |
| 250 g | Wasser |

vorgelegt. Unter Rühren wurde das Gemisch innerhalb von 15 min auf 85°C erhitzt und anschließend unter Rühren noch 10 min bei dieser Temperatur gehalten. Anschließend wurden unter Aufrechterhaltung der 85°C und unter Rühren (zeitgleich beginnend) die Restmenge des Zulauf 1 (innerhalb von 3 h) und die Restmenge des Zulauf 2 (innerhalb von 3,5 h) kontinuierlich zudosiert. Danach wurde das Polymerisationsgemisch noch 2,5 h bei 85°C gerührt. Danach wurde das Reaktionsgemisch auf 25°C abgekühlt und Zulauf 3 innerhalb von 5 min unter Rühren kontinuierlich zugeführt. Erhalten wurde eine wäßrige Polymerdispersion eines Polymervolumengehaltes von 46,4

Vol.-%. Der mittlere Polymerteilchendurchmesser betrug 190 nm.

| | |
|---|---|
| Zulauf 1: | Wäßrige Makroemulsion aus<br>300 g Styrol,<br>282 g n-Butylacrylat,<br>18 g Acrylamid,<br>6,7 g Dowfax 2A1, 45 gew.-%ig und<br>228 g Wasser. |
| Zulauf 2: | 2,4 g Natriumperoxodisulfat und<br>100 g Wasser. |
| Zulauf 3: | 30 g des wäßrigen Lipotin NE Mikronisats aus D1. |

D6: In einem Polymerisationsgefäß wurde ein Gemisch aus

| | |
|---|---|
| 15 Gew.-% | von Zulauf 1, |
| 10 Gew.-% | von Zulauf 2 und |
| 250 g | Wasser |

vorgelegt. Unter Rühren wurde das Gemisch innerhalb von 15 min auf 85°C erhitzt und anschließend unter Rühren noch 20 min bei dieser Temperatur gehalten. Anschließend wurden unter Aufrechterhaltung der 85°C und unter Rühren (zeitgleich beginnend) die Restmenge des Zulauf 1 (innerhalb von 3 h) und die Restmenge des Zulauf 2 (innerhalb von 3,5 h) kontinuierlich zudosiert. Danach wurde das Polymerisationsgemisch noch 2,5 h bei 85°C gerührt. Erhalten wurde eine wäßrige Polymerdispersion D6 eines Polymervolumengehaltes von 27,0 Vol.-%. Der mittlere Polymerteilchendurchmesser betrug 345 nm.

| | |
|---|---|
| Zulauf 1: | Wäßrige Makroemulsion aus<br>5 g Lipotin 100 J (Soja-Lecithin), gelöst in 250 g Styrol,<br>235 g n-Butylacrylat,<br>18 g Methacrylamid und<br>520 g Wasser. |
| Zulauf 2: | 2,0 g Natriumperoxodisulfat und<br>200 g Wasser. |

D7: In einem Polymerisationsgefäß wurde ein Gemisch aus

| | |
|---|---|
| 19 g | des wäßrigen Lipotin NE Mikronisats aus D1, |
| 15 Gew.-% | von Zulauf 1, |
| 10 Gew.-% | von Zulauf 2 und |
| 300 g | Wasser |

vorgelegt. Unter Rühren wurde das Gemisch innerhalb von 15 min auf 85°C erhitzt und anschließend unter Rühren noch 20 min bei dieser Temperatur gehalten. Anschließend wurden unter Aufrechterhaltung der 85°C und unter Rühren (zeitgleich beginnend) die Restmenge des Zulauf 1 (innerhalb von 2 h) und die Restmenge des Zulauf 2 (innerhalb von 2,5 h) kontinuierlich zudosiert. Danach wurde das Polymerisationsgemisch noch 2,5 h bei 85°C gerührt. Erhalten wurde eine wäßrige Polymerdispersion D7 eines Polymervolumengehaltes von 26,8 Vol.-%. Der mittlere Polymerteilchendurchmesser betrug 377 nm.

| | |
|---|---|
| Zulauf 1: | Wäßrige Makroemulsion aus<br>250 g Styrol,<br>235 g n-Butylacrylat,<br>19 g des wäßrigen Lipotin NE-Mikronisats aus D1 und<br>500 g Wasser. |
| Zulauf 2: | 2 g Natriumperoxodisulfat und<br>200 g Wasser. |

D8: 50 g Lipotin NA (acetyliertes Lecithin) werden bei 25°C mittels eines Dispergierrührers (Ultra-Turrax, Fa. IKA, Staufen) in 200 g Wasser mikronisiert (9000 upm, 5 min). Erhalten wurde eine wäßrige Dispersion (Mikronisat) des Lipotin NA. Die mittlere Teilchengröße betrug 210 nm.
In einem Polymerisationsgefäß wurde ein Gemisch aus

| | |
|---|---|
| 14,5 g | einer 35 gew.-%igen wäßrigen Polystyrolsaatdispersion (zahlenmittlere Polystyrolteilchengröße: 38 nm; stabilisiert mittels 10 Gew.-%, bezogen auf dispergiertes Polystyrol, des Na-Salzes der Dodecylbenzolsulfonsäure), |
| 2 Gew.-% | von Zulauf 1, |
| 20 Gew.-% | von Zulauf 2 und |
| 400 g | Wasser |

vorgelegt. Unter Rühren wurde das Gemisch innerhalb von 15 min auf 85°C erhitzt und anschließend noch 10 min unter Rühren bei dieser Temperatur gehalten. Anschließend wurden unter Aufrechterhaltung der 85°C die Restmenge an Zulauf 1 innerhalb von 3 h und die Restmenge an Zulauf 2 innerhalb von 3,5 h (zeitgleich beginnend) dem Polymerisationsgefäß unter Rühren kontinuierlich zudosiert. Danach wurde das Polymerisationsgemisch noch 2,5 h bei 85°C gerührt. Erhalten wurde eine wäßrige Polymerdispersion D8 eines Polymervolumengehaltes von 27,5 Vol.-%. Der mittlere Polymerteilchendurchmesser betrug 167 nm.

Zulauf 1: Wäßrige Makroemulsion aus
250 g Styrol,
235 g n-Butylacrylat,
15 g Acrylamid,
25 g des wäßrigen Lipotin NA-Mikronisats und
550 g Wasser.

Zulauf 2: 2 g Natriumperoxodisulfat und
200 g Wasser.

D9: In einem Polymerisationsgefäß wurde ein Gemisch aus

| | |
|---|---|
| 17,6 g | einer 5 gew.-%igen wäßrigen Lösung von Kaliumoleat, |
| 2 Gew.-% | von Zulauf 1, |
| 20 Gew.-% | von Zulauf 2 und |
| 250 g | Wasser |

vorgelegt. Unter Rühren wurde das Gemisch innerhalb von 15 min auf 85°C erhitzt und anschließend noch 10 min unter Rühren bei dieser Temperatur gehalten. Anschließend wurden unter Aufrechterhaltung der 85°C die Restmenge an Zulauf 1 innerhalb von 3 h und die Restmenge an Zulauf 2 innerhalb von 3,5 h (zeitgleich beginnend) dem Polymerisationsgefäß unter Rühren kontinuierlich zudosiert. Danach wurde das Polymerisationsgemisch noch 2,5 h bei 85°C gerührt. Dann wurde das Reaktionsgemisch auf 25°C abgekühlt und anschließend Zulauf 3 unter Rühren kontinuierlich zudosiert. Erhalten wurde eine wäßrige Polymerdispersion D9 eines Polymervolumengehaltes von 40,9 Vol.-%. Der mittlere Polymerteilchendurchmesser betrug 131 nm.

Zulauf 1: Wäßrige Makroemulsion aus
300 g Styrol,
282 g n-Butylacrylat,
18 g Acrylamid,
94,4 g 5 gew.-%ige wäßrige Lösung an Kaliumoleat und
320 g Wasser.

Zulauf 2: 2,4 g Natriumperoxodisulfat und
100 g Wasser.

Zulauf 3: 30 g des wäßrigen Lipotin NE-Mikronisats aus D1.

VD1: Wie D9, Zulauf 3 wurde jedoch weggelassen.

II) Untersuchung der wäßrigen Polymerdispersionen D1 bis D9 sowie VD1 auf Stabilität und Schaumneigung (alle Polymerdispersionen wurden auf eine Feststoffvolumenkonzentration von 25 Vol.-% eingestellt; die Untersuchungen erfolgten allesamt bei 25°C).

a) Schaumprüfung

100 ml der jeweiligen wäßrigen Polymerdispersion wurden in einen 250 ml Standzylinder gefüllt. Der Standzylinder wurde mit einem Stopfen verschlossen und von Hand 20 mal kräftig geschüttelt. Dann wurde der Maßzylinder abgestellt und das Volumen des gebildeten Schaumes unmittelbar nach Beendigung des Schüttelns sowie nach 3-, 60- und 120-minütiger Ruhezeit nach Beendigung des Schüttelns bestimmt. Die Ergebnisse zeigt die Tabelle.

b) Ionenstabilität

Zur Beurteilung der Stabilität der wäßrigen Polymerdispersionen gegenüber der Einwirkung mehrwertiger Ionen wurden 3 Tropfen der zu prüfenden wäßrigen Polymerdispersion in 10 ml unterschiedlich konzentrierter wäßriger Calciumchloridlösung gegeben. Bestimmt wurde die Konzentration an $CaCl_2$ (in Gew.-%, bezogen auf die $CaCl_2$-Lösung), bei welcher die wäßrige Polymerdispersion gerade noch stabil war (noch keine Anzeichen von Flokkulation, Agglomeration etc. zeigte). Beim Überschreiten dieser Konzentration erfolgte Flokkulation und/oder Agglomeration. Die Ergebnisse zeigt ebenfalls die Tabelle.

c) Rührstabilität

Die Stabilität gegenüber Einwirkung mechanischer Scherkräfte wurde dadurch ermittelt, daß 200 ml der zu prüfenden wäßrigen Polymerdispersion mit 2 Tropfen Entschäumer (Agitan® 281, Entschäumer der Fa. Münzing GmbH, Heilbronn) versetzt und 15 min mit 5000 upm mit einem IKA Rührwerk (IKA RE 166) mit aufgesetzter Disperserscheibe (Durchmesser 40 mm) gerührt wurden. Zur Beurteilung des Ergebnisses wurde der mittlere Polymerteilchendurchmesser I vor ($\bar{d}_Z$, vor) und nach ($\bar{d}_Z$, nach) der Rühreinwirkung ermittelt. Eine unter Rühreinwirkung zunehmende mittlere Polymerteilchengröße zeigt eine abnehmende Stabilität der wäßrigen Polymerdispersion an (Agglomeratbildung). Die Ergebnisse zeigt ebenfalls die Tabelle. Die Tabelle zeigt außerdem den pH-Wert des wäßrigen Dispergiermediums der verschiedenen wäßrigen Polymerdispersionen.

Tabelle

| | D1 | D2 | D3 | D4 | D5 | D6 | D7 | D8 | D9 | VD1 |
|---|---|---|---|---|---|---|---|---|---|---|
| | | | | | | | | | | |
| Schaum (sofort, ml) | 70 | 80 | 60 | 65 | 50 | 40 | 60 | 85 | 10 | 130 |
| Schaum (3 min, ml) | 20 | 40 | 25 | 20 | 20 | 10 | 25 | 35 | 0 | 55 |
| Schaum (60 min, ml) | 0 | 10 | 0 | 5 | 0 | 0 | 5 | 0 | 0 | 25 |
| Schaum (120 min, ml) | 0 | 0 | 0 | 0 | 0 | 0 | 0 | 0 | 0 | 0 |
| | | | | | | | | | | |
| Ionenstabilität (Gew.-% $CaCl_2$) | 20 | 25 | 25 | 20 | 20 | 20 | 25 | 25 | 10 | 1 |
| | | | | | | | | | | |
| pH-Wert | 2,1 | 2,4 | 2,5 | 3,5 | 2,1 | 2,6 | 2,9 | 2,1 | 7,1 | 7,4 |
| | | | | | | | | | | |
| $\bar{d}_Z$,vor | 183 | 189 | 175 | 169 | 190 | 345 | 377 | 167 | 131 | 128 |
| | | | | | | | | | | |
| $\bar{d}_Z$,nach | 175 | 187 | 177 | 170 | 188 | 343 | 383 | 182 | 142 | 182 |

**Patentansprüche**

**1.** Wäßrige Polymerdispersionen, die wenigstens eine Verbindung der allgemeinen Formel I

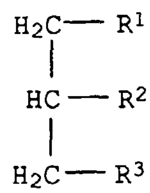

I,

mit

$R^1$ = der Acyloxyrest einer Carbonsäure aus der Gruppe umfassend 8 bis 26 C-Atome aufweisende gesättigte aliphatische Monocarbonsäuren, 8 bis 26 C-Atome aufweisende ein- oder mehrfach ungesättigte aliphatische Monocarbonsäuren und 8 bis 26 C-Atome aufweisende Monocarbonsäuren, die aus den entsprechenden ein- oder mehrfach ungesättigten aliphatischen Monocarbonsäuren durch partielle oder vollständige Hydroxylierung der ungesättigten Funktionen erhältlich sind,

$R^2$ = O-H,

$$O-(CH_2-CH_2-O)_m-H$$

mit m = 1 bis 50, $OSO_3H$, $OPO_2H_2$, ein Acyloxyrest wie $R^1$ oder

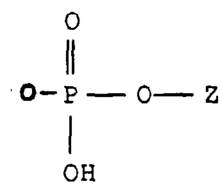

mit

$$Z = CH_2-CH_2-\overset{\oplus}{N}(CH_3)_3\overset{\ominus}{O}H,$$

$CH_2$-$CH_2$-$NH_2$,

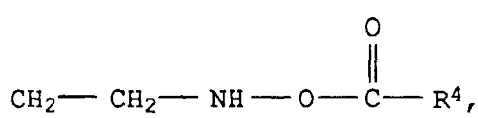

$C_6H_6(OH)_5$,

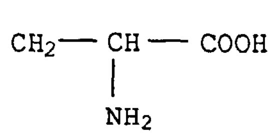

oder
H,

$R^3$ = O-H,

$$O-(CH_2-CH_2-O)_m-H$$

mit m = 1 bis 50, $OSO_3H$, $OPO_2H_2$, ein Acyloxyrest wie $R^1$ oder

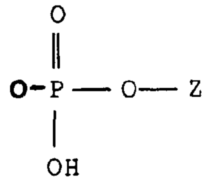

und

$R^4$ = $C_1$- bis $C_5$-Alkyl,

mit der Maßgabe, daß genau einer der beiden Reste $R^2$, $R^3$

= 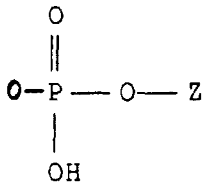

ist,
und/oder ein Salz einer Verbindung der allgemeinen Formel I enthalten und deren Gehalt an dispergiertem Polymer, bezogen auf die wäßrige Polymerdispersion, ≥ 10 Vol.-% beträgt.

**2.** Wäßrige Polymerdispersionen nach Anspruch 1, deren Gehalt an dispergiertem Polymer, bezogen auf die wäßrige Polymerdispersion, ≥ 20 Vol.-% beträgt.

**3.** Wäßrige Polymerdispersionen nach Anspruch 1 oder 2, deren Gehalt an dispergiertem Polymer, bezogen auf die wäßrige Polymerdispersion, 20 bis 75 Vol.-% beträgt.

**4.** Wäßrige Polymerdispersionen nach Anspruch 1 bis 3, deren Gehalt an dispergiertem Polymer, bezogen auf die wäßrige Polymerdispersion, 30 bis 65 Vol.-% beträgt.

**5.** Wäßrige Polymerdispersionen nach Anspruch 1 bis 4, deren Gehalt an dispergiertem Polymer, bezogen auf die wäßrige Polymerdispersion, 40 bis 60 Vol.-% beträgt.

**6.** Wäßrige Polymerdispersionen nach Anspruch 1 bis 5, die als Verbindung I eine solche enthalten, deren Rest $R^1$ 12 bis 24 C-Atome aufweist.

**7.** Wäßrige Polymerdispersionen nach Anspruch 1 bis 6, die als Verbindung I eine solche enthalten, deren Rest $R^1$ 14 bis 22 C-Atome aufweist.

**8.** Wäßrige Polymerdispersionen nach Anspruch 1 bis 7, die als Verbindung I eine solche enthalten, deren Rest $R^1$ eine gerade Anzahl von C-Atomen aufweist.

**9.** Wäßrige Polymerdispersionen nach Anspruch 1 bis 8, die als Verbindung I eine solche enthalten, deren Acyloxyrest $R^1$ sich ableitet von einer Carbonsäure aus der Gruppe umfassend Palmitinsäure, Stearinsäure, Ölsäure, Linolsäure, Linolensäure, Palmitinsäure und Arachidonsäure.

**10.** Wäßrige Polymerdispersionen nach Anspruch 1 bis 9, die als Verbindung I eine solche enthalten, in der $R^2$ oder $R^3$ eine Hydroxylgruppe ist.

**11.** Wäßrige Polymerdispersionen nach Anspruch 1 bis 10, die als Verbindung I eine solche enthalten, in der $R^2$ eine Hydroxylgruppe ist.

**12.** Wäßrige Polymerdispersionen nach Anspruch 1 bis 11, die als Verbindung I eine solche enthalten, deren Rest

$$Z = CH_2 - CH_2 - \overset{\oplus}{N}(CH_3)_3\overset{\ominus}{O}H,$$

$CH_2$-$CH_2$-$NH_2$ oder $C_6H_6(OH)_5$ ist.

**13.** Wäßrige Polymerdispersionen nach Anspruch 1 bis 12, deren dispergiertes Polymer ein relatives zahlenmittleres Molekulargewicht von 50000 bis $3 \cdot 10^6$ aufweist.

**14.** Wäßrige Polymerdispersionen nach Anspruch 1 bis 13, deren dispergiertes Polymer ein relatives zahlenmittleres Molekulargewicht von 150000 bis $1 \cdot 10^6$ aufweist.

**15.** Wäßrige Polymerdispersionen nach Anspruch 1 bis 14, deren Gesamtgehalt an Dispergiermittel, bezogen auf dispergiertes Polymer, $\geq$ 0,1 bis $\leq$ 20 Gew.-% beträgt.

**16.** Wäßrige Polymerdispersionen nach Anspruch 1 bis 15, deren Gesamtgehalt an Dispergiermittel, bezogen auf dispergiertes Polymer, $\geq$ 0,1 bis $\leq$ 10 Gew.-% beträgt.

**17.** Wäßrige Polymerdispersionen nach Anspruch 1 bis 16, deren Gesamtgehalt an Dispergiermittel, bezogen auf dispergiertes Polymer, $\geq$ 0,1 bis $<$ 5 Gew.-% beträgt.

**18.** Wäßrige Polymerdispersionen nach Anspruch 1 bis 17, die, bezogen auf die Gesamtmenge an enthaltenem Dispergiermittel, wenigstens 10 Gew.-% einer Verbindung der allgemeinen Formel I und/oder deren Salzen enthalten.

**19.** Wäßrige Polymerdispersionen nach Anspruch 1 bis 18, die, bezogen auf die Gesamtmenge an enthaltenem Dispergiermittel, wenigstens 20 Gew.-% einer Verbindung der allgemeinen Formel I und/oder deren Salzen enthalten.

**20.** Wäßrige Polymerdispersionen nach Anspruch 1 bis 19, deren zahlenmittlerer Polymerteilchendurchmesser $\geq$ 120 nm beträgt.

**21.** Wäßrige Polymerdispersionen nach Anspruch 1 bis 20, deren zahlenmittlerer Polymerteilchendurchmesser $\geq$ 150 nm beträgt.

**22.** Wäßrige Polymerdispersionen nach Anspruch 1 bis 21, deren zahlenmittlerer Polymerteilchendurchmesser $\geq$ 200 nm und $\leq$ 800 nm beträgt.

**23.** Wäßrige Polymerdispersionen nach Anspruch 1 bis 22, deren dispergiertes Polymer durch radikalische Polymerisation von wenigstens eine ungesättigte Kohlenstoff-Kohlenstoff-Bindung aufweisenden Monomeren erhältlich ist.

**24.** Wäßrige Polymerdispersionen nach Anspruch 1 bis 23, deren dispergiertes Polymer durch radikalische wäßrige Makroemulsionspolymerisation von wenigstens eine ungesättigte Kohlenstoff-Kohlenstoff-Bindung aufweisenden Monomeren erhältlich ist.

**25.** Wäßrige Polymerdispersionen nach Anspruch 1 bis 24, deren dispergiertes Polymer in polymerisierter Form zu

- 70 bis 100 Gew.-% aus Estern der Acryl- und/oder Methacrylsäure mit 1 bis 12 C-Atome aufweisendem Alkanol und/oder Styrol,

oder

- 70 bis 100 Gew.-% Styrol und/oder Butadien,

oder

- 70 bis 100 Gew.-% Vinylchlorid und/oder Vinylidenchlorid,

oder

- 40 bis 100 Gew.-% Vinylacetat, Vinylpropionat und/oder Ethylen

aufgebaut ist.

**26.** Wäßrige Polymerdispersionen nach Anspruch 1 bis 25, deren wäßriges Dispergiermedium einen pH-Wert von 2 bis 5 aufweist.

**27.** Verfahren zur Herstellung einer wäßrige Polymerdispersion gemäß Anspruch 1 bis 26, dadurch gekennzeichnet, daß man wenigstens eine monoethylenisch ungesättigte Gruppe aufweisende Monomere nach der Methode der radikalischen wäßrigen Makroemulsionspolymerisation unter Zusatz wenigstens einer Verbindung der allgemeinen Formel I und/oder deren Salzen polymerisiert.

**28.** Verfahren nach Anspruch 27, dadurch gekennzeichnet, daß es nach dem Zulaufverfahren durchgeführt wird.

**29.** Verfahren nach Anspruch 28, dadurch gekennzeichnet, daß die wenigstens eine Verbindung der allgemeinen Formel I in in wäßrigem Medium mikronisierter Form oder in in den zu polymerisierenden Monomeren gelöster Form angewendet wird.

**30.** Wäßrige Polymerdispersionen, erhältlich nach einem Verfahren gemäß Anspruch 27 bis 29.

**31.** Verwendung wäßriger Polymerdispersionen gemäß Anspruch 1 bis 26 oder 30 als Bindemittel, Beschichtungsmittel und/oder als Klebstoff.

**32.** Substrat, das mit einer wäßrigen Polymerisatdispersion gemäß Anspruch 1 bis 26 oder 30 gebunden, beschichtet und/oder geklebt ist.

**Claims**

**1.** An aqueous polymer emulsion which contains at least one compound of the formula I

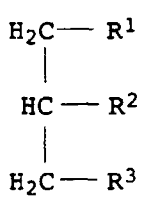

I,

wherein

$R^1$ is an acyloxy radical of a carboxylic acid selected from the group consisting of saturated aliphatic monocarboxylic acids of 8 to 26 carbon atoms, monounsaturated or polyunsaturated aliphatic monocarboxylic acids of 8 to 26 carbon atoms and monocarboxylic acids of 8 to 26 carbon atoms which are obtainable from the corresponding monounsaturated or polyunsaturated aliphatic monocarboxylic acids by partial or complete hydroxylation of the unsaturated functions,

$R^2$ is O-H,

$O-(CH_2-CH_2-O)_m-H$

in which m is from 1 to 50, $OSO_3H$, $OPO_2H_2$, an acyloxy radical $R^1$ or

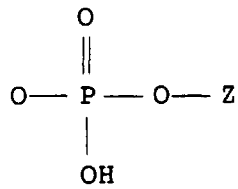

in which Z is

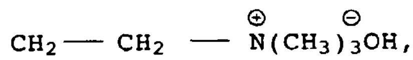

$CH_2-CH_2-NH_2$,

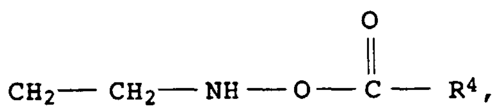

$C_6H_6(OH)_5$,

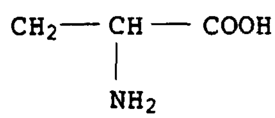

or
H,

$R^3$ is O-H,

$O-(CH_2-CH_2-O)_m-H$

in which m is from 1 to 50, $OSO_3H$, $OPO_2H_2$, an acyloxy radical $R^1$ or

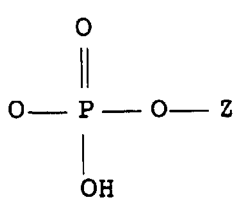

and

$R^4$ is $C_1$- to $C_5$-alkyl,

with the proviso that exactly one of the two radicals $R^2$ and $R^3$ is

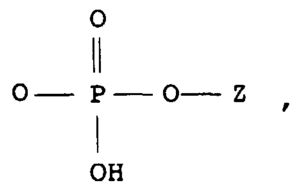

and/or a salt of a compound of the formula I and whose content of dispersed polymer is ≥ 10% by volume, based on the aqueous polymer emulsion.

2. An aqueous polymer emulsion as claimed in claim 1, whose content of dispersed polymer is ≥ 20% by volume, based on the aqueous polymer emulsion.

3. An aqueous polymer emulsion as claimed in claim 1 or 2, whose content of dispersed polymer is from 20 to 75% by volume, based on the aqueous polymer emulsion.

4. An aqueous polymer emulsion as claimed in any of claims 1 to 3, whose content of dispersed polymer is from 30 to 65% by volume, based on the aqueous polymer emulsion.

5. An aqueous polymer emulsion as claimed in any of claims 1 to 4, whose content of dispersed polymer is from 40 to 60% by volume, based on the aqueous polymer emulsion.

6. An aqueous polymer emulsion as claimed in any of claims 1 to 5, which contains, as compound I, one in which $R^1$ has from 12 to 24 carbon atoms.

7. An aqueous polymer emulsion as claimed in any of claims 1 to 6, which contains, as compound I, one in which $R^1$ has from 14 to 22 carbon atoms.

8. An aqueous polymer emulsion as claimed in any of claims 1 to 7, which contains, as compound I, one in which $R^1$ has an even number of carbon atoms.

9. An aqueous polymer emulsion as claimed in any of claims 1 to 8, which contains, as compound I, one whose acyloxy radical $R^1$ is derived from a carboxylic acid selected from the group consisting of palmitic acid, stearic acid, oleic acid, linoleic acid, linolenic acid, palmitoleic acid and arachidonic acid.

10. An aqueous polymer emulsion as claimed in any of claims 1 to 9, which contains, as compound I, one in which $R^2$ or $R^3$ is hydroxyl.

11. An aqueous polymer emulsion as claimed in any of claims 1 to 10, which contains, as compound I, one in which $R^2$ is hydroxyl.

12. An aqueous polymer emulsion as claimed in any of claims 1 to 11, which contains, as compound I, one in which Z is

$$CH_2-CH_2-\overset{\oplus}{N}(CH_3)_3\overset{\ominus}{O}H,$$

$CH_2$-$CH_2$-$NH_2$ or $C_6H_6(OH)_5$.

13. An aqueous polymer emulsion as claimed in any of claims 1 to 12, whose dispersed polymer has a relative number average molecular weight of from 50,000 to $3{\cdot}10^6$.

14. An aqueous polymer emulsion as claimed in any of claims 1 to 13, whose dispersed polymer has a relative number average molecular weight of from 150,000 to $1{\cdot}10^6$.

15. An aqueous polymer emulsion as claimed in any of claims 1 to 14, whose total content of dispersant is from ≥ 0.1 to ≤ 20% by weight, based on disperse polymer.

**16.** An aqueous polymer emulsion as claimed in any of claims 1 to 15, whose total content of dispersant is from ≥ 0.1 to ≤ 10% by weight, based on disperse polymer.

**17.** An aqueous polymer emulsion as claimed in any of claims 1 to 16, whose total content of dispersant is from > 0.1 to < 5% by weight, based on disperse polymer.

**18.** An aqueous polymer emulsion as claimed in any of claims 1 to 17, which contains at least 10% by weight, based on the total amount of dispersant present, of a compound of the formula I and/or of a salt thereof.

**19.** An aqueous polymer emulsion as claimed in any of claims 1 to 18, which contains at least 20% by weight, based on the total amount of dispersant present, of a compound of the formula I and/or of a salt thereof.

**20.** An aqueous polymer emulsion as claimed in any of claims 1 to 19, whose number average polymer particle diameter is ≥ 120 nm.

**21.** An aqueous polymer emulsion as claimed in any of claims 1 to 20, whose number average polymer particle diameter is ≥ 150 nm.

**22.** An aqueous polymer emulsion as claimed in any of claims 1 to 21, whose number average polymer particle diameter is ≥ 200 nm and ≤ 800 nm.

**23.** An aqueous polymer emulsion as claimed in any of claims 1 to 22, whose disperse polymer is obtainable by free radical polymerization of monomers having at least one unsaturated carbon-carbon bond.

**24.** An aqueous polymer emulsion as claimed in any of claims 1 to 23, whose disperse polymer is obtainable by free radical aqueous macroemulsion polymerization of monomers having at least one unsaturated carbon-carbon bond.

**25.** An aqueous polymer emulsion as claimed in any of claims 1 to 24, whose disperse polymer in polymerized form comprises

- from 70 to 100% by weight of esters of acrylic and/or methacrylic acid with an alkanol of 1 to 12 carbon atoms and/or styrene

or

- from 70 to 100% by weight of styrene and/or butadiene

or

- from 70 to 100% by weight of vinyl chloride and/or vinylidene chloride

or

- from 40 to 100% by weight of vinyl acetate, vinyl propionate and/or ethylene.

**26.** An aqueous polymer emulsion as claimed in any of claims 1 to 25, whose aqueous dispersing medium has a pH of from 2 to 5.

**27.** A process for the preparation of an aqueous polymer emulsion as claimed in any of claims 1 to 26, wherein monomers having at least one monoethylenically unsaturated group are polymerized by the free radical aqueous macroemulsion polymerization method with the addition of at least one compound of the formula I and/or of a salt thereof.

**28.** A process as claimed in claim 27, which is carried out by the feed method.

**29.** A process as claimed in claim 28, wherein one or more compounds of the formula I are used in a form micronized in an aqueous medium or in a form in solution in the monomers to be polymerized.

**30.** An aqueous polymer emulsion, obtainable by a process as claimed in any of claims 27 to 29.

**31.** The use of an aqueous polymer emulsion as claimed in any of claims 1 to 26 or 30 as a binder, coating material and/or adhesive.

**32.** A substrate which is bound, coated and/or adhesively bonded using an aqueous polymer emulsion as claimed in any of claims 1 to 26 or 30.

## Revendications

**1.** Dispersions aqueuses de polymère qui contiennent au moins un composé de formule générale I

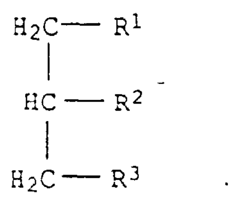

I,

avec

$R^1$ le reste acyloxy d'un acide carboxylique venant du groupe comprenant les acides monocarboxyliques aliphatiques saturés à 8-26 atomes de carbone, les acides monocarboxyliques aliphatiques insaturés une ou plusieurs fois à 8-26 atomes de carbone et les acides monocarboxyliques à 8-26 atomes de carbone, qu'on peut obtenir à partir des acides monocarboxyliques, aliphatiques, insaturés une ou plusieurs fois, correspondants, par hydroxylation partielle ou complète des fonctions insaturées,

$R^2$ O-H,

$$O-(CH_2-CH_2-O)_m H$$

avec m = 1 à 50, $OSO_3H$, $OPO_2H_2$, un reste acyloxy comme $R^1$ ou

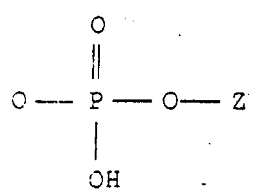

avec Z =

$$CH_2-CH_2-\overset{\oplus}{N}(CH_3)_3\overset{\ominus}{O}H,$$

$$CH_2\text{-}CH_2\text{-}NH_2,$$

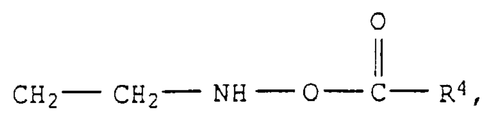

$C_6H_6(OH)_5$,

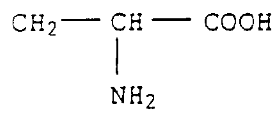

ou H,

$R^3$ -O-H,

$$O-(CH_2-CH_2-O)_m H$$

avec m = 1 à 50, $OSO_3H$, $OPO_2H_2$, un reste acyloxy comme $R^1$ ou

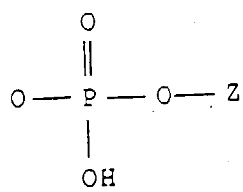

et

$R^4$ un groupement alkyle en $C_1$-$C_5$,
avec la condition que l'un des deux restes $R^2$, $R^3$ est

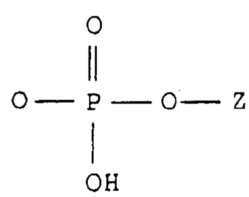

et/ou un sel d'un composé de formule générale I et dont la teneur en polymère dispersé est ≥ 10 % en volume, par rapport à la dispersion aqueuse de polymère.

**2.** Dispersions aqueuses de polymère selon la revendication 1, dont la teneur en polymère dispersé est ≥ 20 % en volume, par rapport à la dispersion aqueuse de polymère.

**3.** Dispersions aqueuses de polymère selon l'une des revendications 1 et 2, dont la teneur en polymère dispersé est de 20 à 75 % en volume, par rapport à la dispersion aqueuse de polymère.

**4.** Dispersions aqueuses de polymère selon l'une des revendications 1 à 3, dont la teneur en polymère dispersé est de 30 à 65 % en volume, par rapport à la dispersion aqueuse de polymère.

**5.** Dispersions aqueuses de polymère selon l'une des revendications 1 à 4, dont la teneur en polymère dispersé est de 40 à 60 % en volume, par rapport à la dispersion aqueuse de polymère.

**6.** Dispersions aqueuses de polymère selon l'une des revendications 1 à 5, qui contiennent un composé I dont le reste $R^1$ comprend 12 à 24 atomes de carbone.

**7.** Dispersions aqueuses de polymère selon l'une des revendications 1 à 6, qui contiennent un composé I dont le reste $R^1$ comprend 14 à 22 atomes de carbone.

**8.** Dispersions aqueuses de polymère selon l'une des revendications 1 à 7, qui contiennent un composé I dont le reste $R^1$ comprend un nombre pair d'atomes de carbone.

**9.** Dispersions aqueuses de polymère selon l'une des revendications 1 à 8, qui contiennent un composé I dont le reste acyloxy $R^1$ dérive d'un acide carboxylique venant du groupe comprenant l'acide palmitique, l'acide stéarique, l'acide oléique, l'acide linoléique, l'acide linolénique, l'acide palmitique et l'acide arachidonique.

**10.** Dispersions aqueuses de polymère selon l'une des revendications 1 à 9, qui contiennent un composé I dans lequel $R^2$ ou $R^3$ est un groupement hydroxyle.

**11.** Dispersions aqueuses de polymère selon l'une des revendications 1 à 10, qui contiennent un composé I dans lequel $R^2$ est un groupement hydroxyle.

**12.** Dispersions aqueuses de polymère selon l'une des revendications 1 à 11, qui contiennent un composé I dont le reste Z est

$$CH_2—CH_2—\overset{\oplus}{N}(CH_3)_3\overset{\ominus}{OH},$$

$$CH_2\text{-}CH_2\text{-}NH_2$$

ou $C_6H_6(OH)_5$.

**13.** Dispersions aqueuses de polymère selon l'une des revendications 1 à 12, dont le polymère dispersé présente un poids moléculaire moyen relatif en nombre de 50 000 à $3.10^6$.

**14.** Dispersions aqueuses de polymère selon l'une des revendications 1 à 13, dont le polymère dispersé présente un poids moléculaire moyen relatif en nombre de 150 000 à $1.10^6$.

**15.** Dispersions aqueuses de polymère selon l'une des revendications 1 à 14, dont la teneur totale en agent dispersant est ≥ 0,1 % en poids et ≤ 20 % en poids, par rapport au polymère dispersé.

**16.** Dispersions aqueuses de polymère selon l'une des revendications 1 à 15, dont la teneur totale en agent dispersant est ≥ 0,1 % en poids et ≤ 10 % en poids, par rapport au polymère dispersé.

**17.** Dispersions aqueuses de polymère selon l'une des revendications 1 à 16, dont la teneur totale en agent dispersant est ≥ 0,1 % en poids et ≤ 5 % en poids, par rapport au polymère dispersé.

**18.** Dispersions aqueuses de polymère selon l'une des revendications 1 à 17, qui contiennent au moins 10 % en poids, par rapport à la quantité totale en agent dispersant contenu, d'un composé de formule générale I et/ou de ses sels.

**19.** Dispersions aqueuses de polymère selon l'une des revendications 1 à 18, qui contiennent au moins 20 % en poids, par rapport à la quantité totale en agent dispersant contenu, d'un composé de formule générale et/ou de ses sels.

**20.** Dispersions aqueuses de polymère selon l'une des revendications 1 à 19, dont le diamètre moyen en nombre des particules du polymère est ≥ 120 nm.

**21.** Dispersions aqueuses de polymère selon l'une des revendications 1 à 20, dont le diamètre moyen en nombre des particules du polymère est ≥ 150 nm.

**22.** Dispersions aqueuses de polymère selon l'une des revendications 1 à 21, dont le diamètre moyen en nombre des particules du polymère est ≥ 200 nm et ≤ 800 nm.

**23.** Dispersions aqueuses de polymère selon l'une des revendications 1 à 22, dont le polymère dispersé est obtenu par polymérisation radicalaire de monomères comprenant au moins une liaison carbone-carbone insaturée.

**24.** Dispersions aqueuses de polymère selon l'une des revendications 1 à 23, dont le polymère dispersé est obtenu par polymérisation radicalaire en macroémulsion aqueuse de monomères comprenant au moins une liaison carbone-carbone insaturée.

**25.** Dispersions aqueuses de polymère selon l'une des revendications 1 à 24, dont le polymère dispersé est construit, sous forme polymérisée, pour

- 70 à 100 % en poids à partir d'esters d'acide acrylique et/ou méthacrylique avec un alcanol à 1-12 atomes de carbone et/ou du styrène,

ou

- 70 à 100 % en poids de styrène et/ou de butadiène,

ou

- 70 à 100 % en poids de chlorure de vinyle et/ou de chlorure de vinylidène,

ou

- 40 à 100 % en poids d'acétate de vinyle, de propionate de vinyle et/ou d'éthylène.

**26.** Dispersions aqueuses de polymère selon l'une des revendications 1 à 25, dont le milieu de dispersion aqueux présente un pH de 2 à 5.

**27.** Procédé de fabrication d'une dispersion aqueuse de polymère selon l'une des revendications 1 à 26, caractérisé en ce que l'on polymérise un monomère comprenant au moins un groupement à insaturation monoéthylénique suivant le procédé de polymérisation radicalaire en macroémulsion aqueuse par ajout d'au moins un composé de formule générale I et/ou de ses sels.

**28.** Procédé selon la revendication 27, caractérisé en ce qu'on le réalise après le procédé d'arrivée.

**29.** Procédé selon la revendication 28, caractérisé en ce qu'on utilise au moins un composé de formule générale I sous forme micronisée en milieu aqueux ou sous forme dissoute dans les monomères à polymériser.

**30.** Dispersions aqueuses de polymère obtenues par un procédé selon l'une des revendications 27 à 29.

**31.** Utilisation de dispersions aqueuses de polymère selon l'une des revendications 1 à 26 ou 30 en tant que liant, agent de revêtement et/ou adhésif.

**32.** Substrat, lié, revêtu et/ou collé avec une dispersion aqueuse de polymère selon l'une des revendications 1 à 26 ou 30.